# EUROPÄISCHE PATENTANMELDUNG

(11) **EP 0 616 930 A1**
(43) Veröffentlichungstag der Anmeldung: **28.09.1994**
(21) Anmeldenummer: 94102976.1
(22) Anmeldetag: 28.02.1994
(51) Int. Cl.: B60T 8/26, B60T 13/68

(54) **Drucksteuerventil für die belagverschleissabhängige Bremsdrucksteuerung**

(30) Priorität: 24.03.1993 DE 4309465
(71) Anmelder: ROBERT BOSCH GMBH, 70442 Stuttgart (DE)
(72) Erfinder: Goebels, Hermann, Dipl.-Ing., D-71701 Schwieberdingen (DE)

(57) **Zusammenfassung**

In einer Druckluft-Bremsanlage (10) eines Nutzkraftfahrzeugs soll mit einfachen Mitteln der Bremsdruck an der Radbremse (16) vermindert werden, wenn ein Sensor (59) übermäßigen Verschleiß am Bremsbelag (60) feststellt.

In einer zwischen einem Bremsventil (13) und einem Bremszylinder (15) verlaufenden Arbeitsleitung (14) ist ein Drucksteuerventil (19) mit einem Einlaßventil (23) und einem Auslaßventil (35) sowie einer druckmindernden Ventileinrichtung (43) angeordnet. Bei Vorliegen eines verschleißabhängigen Signals wird bei einer Bremsung das Einlaßventil (23) durch Ansteuern eines Umschaltventils (27) in die Sperrstellung geschaltet, so daß sich Bremsdruck nur über die druckmindernde Ventileinrichtung (43) im Bremszylinder (15) aufbauen kann.

## Beschreibung

### Stand der Technik

Die Erfindung geht aus von einem Drucksteuerventil nach der Gattung des Hauptanspruchs. Ein derartiges Drucksteuerventil ist aus EP-A-0 304 610 bekannt. Dieses Ventil ist zwischen einem Bremsventil und einem Bremszylinder einer Druckluft-Bremsanlage mit Blockierschutzeinrichtung angeordnet und sowohl für normalen, d.h. ungeregelten als auch für im Blockierschutzfall geregelten Betrieb vorgesehen. Um einen beschleunigten Druckabbau zu erzielen, ist die Druckmitteleingangskammer des bekannten Ventils mittels eines Rückschlagventils unterteilt, so daß der Rückstrom des Druckmittels vom Bremszylinder über das Auslaßventil zur Atmosphäre erfolgt. Der Abbau von Restdruck im Bremszylinder ist dagegen ausgeschlossen, da dies die federbelasteten Schließglieder des Einlaßventils und des Auslaßventils verhindern.

### Vorteile der Erfindung

Das erfindungsgemäße Drucksteuerventil mit den kennzeichnenden Merkmalen des Hauptanspruchs hat demgegenüber den Vorteil, daß es mit geringem baulichen Aufwand sowohl eine ungeminderte als auch in Abhängigkeit von Bremsbelagverschleiß geminderte Bremsdruckeinsteuerung in den Bremszylinder gestattet, darüber hinaus in beiden Betriebszuständen einen beschleunigten Druckabbau unmittelbar zur Atmosphäre ermöglicht, während sich Restdrücke über das Bremsventil abbauen können. Dabei wirkt sich vorteilhaft aus, daß die zum Restdruckabbau benutzte, eine zwischen Druckmitteleingangskammer und Druckmittelausgangskammer ständig offene Verbindung bildende Drossel auch bei ungeminderter Druckeinsteuerung durch das geschlossene Auslaßventil von der Atmosphäre abgetrennt ist, so daß kein Druckmittelverlust auftreten kann.

Durch die in den Unteransprüchen aufgeführten Maßnahmen sind vorteilhafte Weiterbildungen und Verbesserungen des im Hauptanspruch angegebenen Drucksteuerventils möglich.

### Zeichnung

Ein Ausführungsbeispiel der Erfindung ist in der Zeichnung vereinfacht dargestellt und in der nachfolgenden Beschreibung näher erläutert. Es zeigen Figur 1 einen Schaltplan einer Druckluft-Bremsanlage mit einem in Schaltzeichen wiedergegebenen Drucksteuerventil für die belagverschleißabhängige Bremsdrucksteuerung, Figur 2 eine Bauform eines schematisch im Schnitt gezeichneten Drucksteuerventils mit druckmindernder Ventileinrichtung, Figuren 3 und 4 Diagramme des in unterschiedlicher Weise einer Druckminderung unterworfenen Bremsdruckverlaufs und Figur 5 einen Schaltplan einer Druckluft-Bremsanlage eines zweiachsigen Fahrzeugs mit achsweiser Belagverschleißregelung.

### Beschreibung des Ausführungsbeispiels

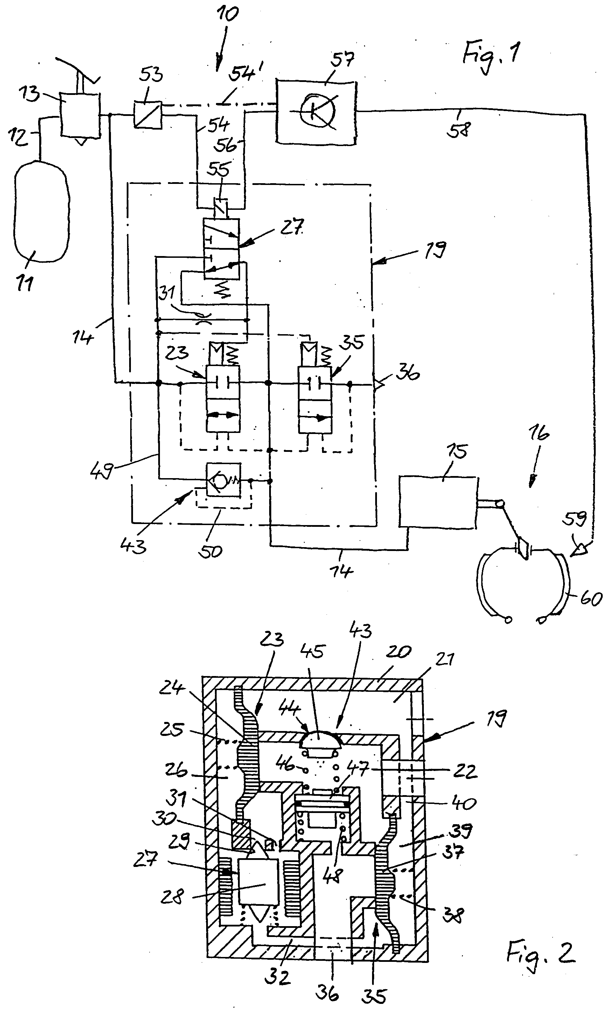

Die in Figur 1 vereinfacht dargestellte Druckluft-Bremsanlage 10 eines Nutzkraftfahrzeugs gibt lediglich einen Bremskreis wieder, welcher einer nicht gezeichneten Fahrzeugachse zugeordnet ist. Die Bremsanlage 10 besitzt eine Druckmittelquelle (Druckluftvorratsbehälter) 11, von der eine Versorgungsleitung 12 zu einem Bremsventil 13 ausgeht. Vom Bremsventil 13 führt eine Arbeitsleitung 14 zu einem Bremszylinder 15 einer Radbremse 16. An die Arbeitsleitung 14 können weitere Bremszylinder des Bremskreises angeschlossen sein.

In der Arbeitsleitung 14 befindet sich ein Drucksteuerventil 19, welches nachstehend anhand von Figur 2 erläutert wird. Für funktionsgleiche Elemente des Drucksteuerventils 19 sind in den Figuren 1 und 2 die gleichen Bezugszahlen verwendet.

Das Drucksteuerventil 19 weist ein Ventilgehäuse 20 mit einer Druckmitteleingangskammer 21 auf, in welche die vom Bremsventil 13 herangeführte Arbeitsleitung 14 mündet. Von einer Druckmittelausgangskammer 22 des Drucksteuerventils 19 führt die Arbeitsleitung 14 zum Bremszylinder 15. Die Druckmittelausgangskammer 22 ist über ein steuerbares Einlaßventil 23 mit der Druckmitteleingangskammer 21 verbindbar. Für die Betätigung des Einlaßventils 23 ist ein Schließglied 24 in Form einer Membrane vorgesehen. Bei Nichtbetätigung des Drucksteuerventils 19 trennt das Schließglied 24 aufgrund der Wirkung einer an ihm in Schließrichtung angreifenden Druckfeder 25 geringer Vorspannkraft und niedriger Federkonstante die Verbindung zwischen der Druckmitteleingangskammer 21 und der Druckmittelausgangskammer 22. Das Schließglied 24 des Einlaßventils 23 ist in dessen Schließrichtung von einem Druck in einer Steuerkammer 26 beaufschlagbar. Die Steuerkammer 26 ist über ein elektromagnetbetätigbares Umschaltventil 27 mit der Druckmitteleingangskammer 21 verbindbar. Bei nicht erregtem Umschaltventil 27 hält sein federbetätigter Schließkörper 28 durch Angriff an einem Ventilsitz 29 eine Verbindungsbohrung 30 zur Druckmitteleingangskammer 21 geschlossen. Die Verbindungsbohrung 30 sowie der Ventilsitz 29 sind von einer Drossel 31 in Form einer Bohrung überbrückt. Bei nicht erregtem Umschaltventil 27 ist die Steuerkammer 26 des Einlaßventils 23 durch einen Kanal 32 mit der Druckmittelausgangskammer 22 verbunden. Bei erregtem Umschaltventil 27 ist diese Verbindung geschlossen und die Verbindungsbohrung 30 geöffnet.

Die Druckmittelausgangskammer 22 des Drucksteuerventils 19 ist über ein Auslaßventil 35 mit einer Druckentlastungsstelle (Atmosphäre) 36 verbindbar. Das Auslaßventil 35 besitzt für seine Betätigung ein Schließglied 37 in Form einer Membrane. Das Auslaßventil 35 ist bei nicht betätigtem Drucksteuerventil 19 aufgrund der Wirkung einer am Schließglied 37 angreifenden Druckfeder 38 geringer Vorspannkraft und niedriger Federkonstante geschlossen. Das Schließglied 37 des Auslaßventils 35 ist in dessen Schließrichtung von einem Druck in einer Steuerkammer 39 beaufschlagbar. Diese ist über einen Kanal 40 an die Druckmitteleingangskammer 21 angeschlossen.

Das Drucksteuerventil 19 ist mit einer druckmindernden Ventileinrichtung 43 ausgestattet. Sie ist als Rückschlagventil 44 mit einem Schließglied 45 ausgebildet, welches unter der Wirkung einer vorgespannten Feder 46 steht. Die als Schraubendruckfeder gestaltete Feder 46 greift schließgliedabgewandt an einem im Ventilgehäuse 20 druckdicht aufgenommenen Kolbenglied 47 oder Membranglied an. Dieses steht auf seiner anderen Seite unter der Vorspannkraft einer am Ventilgehäuse 20 abgestützten zweiten Druckfeder 48. Die druckmindernde Ventileinrichtung 43 verbindet die Druckmitteleingangskammer 21 mit der Druckmittelausgangskammer 22, was in Figur 1 als das Einlaßventil 23 überbrückende Bypassleitung 49 dargestellt ist.

Die druckmindernde Ventileinrichtung 43 kann hiervon abweichend auch nur aus dem Schließglied 45 des Rückschlagventils 44 und der Feder 46 bestehen, die dann schließgliedabgewandt am Ventilgehäuse 20 abgestützt ist. Bei einer solchen Ausgestaltung entfällt die in Figur 1 gezeichnete Steuerleitung 50.

An die Arbeitsleitung 14 ist bremsventilseitig ein Druckschalter 53 angeschlossen. Dieser ist dazu bestimmt, bei einer Bremsbetätigung ein elektrisches Signal über eine Steuerleitung 54 an ein elektromagnetisches Betätigungsmittel 55 des Umschaltventils 27 abzugeben. Das Betätigungsmittel 55 steht außerdem über eine zweite elektrische Steuerleitung 56 mit einem elektronischen Steuergerät 57 in Verbindung. Dieses erhält über eine elektrische Steuerleitung 58 Signale von einem Sensor 59, mit dem bei jeder Bremsung oder nach einer bestimmten Zahl von Bremsungen der Verschleißzustand des Bremsbelages 60 der Radbremse 16 (oder mittels weiterer Sensoren bei mehreren Radbremsen des Bremskreises) erfaßt und ggf. gespeichert wird.

Das Umschaltventil 27 ist in seine die Verbindungsbohrung 30 zwischen der Druckmitteleingangskammer 21 und der Steuerkammer 26 des Einlaßventils 23 freigebende Stellung des Schließkörpers 28 schaltbar, wenn sowohl ein vom Steuergerät 57 bereitgestelltes, belagverschleißabhängiges Signal als auch ein Signal vorliegt, welches bei einem Bremsvorgang ausgelöst wird oder einen Bremsvorgang auslöst. Das letztgenannte Signal kann, wie beschrieben, vom Druckschalter 53 oder einem Drucksensor oder einem Bremslichtschalter erzeugt werden.

Abweichend hiervon kann das Signal des Druckschalters 53 über eine Steuerleitung 54' dem Steuergerät 57 zugeführt werden. Dieses sensiert den Belagverschleiß und steuert bei Vorliegen von übermäßigem Belagverschleiß das Umschaltventil 27 über die Steuerleitung 56 an. Die Steuerleitung 54 kann dann entfallen.

Die Druckluft-Bremsanlage 10 hat folgende Wirkungsweise:
Bei normalen Bremsungen, während denen das Umschaltventil 27 seine gezeichnete, nicht erregte Stellung einnimmt, erfolgt Druckaufbau im Bremszylinder 15 durch Einsteuern von Druckmittel durch das Bremsventil 13 in die Druckmitteleingangskammer 21 des Drucksteuerventils 19. Das Druckmittel öffnet das Einlaßventil 23 gegen die geringe Vorspannkraft der Druckfeder 25 und gelangt durch die Druckmittelausgangskammer 22 zum Bremszylinder 15. Das Auslaßventil 35 wird durch von der Druckmitteleingangskammer 21 über den Kanal 40 in die Steuerkammer 39 eingeströmtes Druckmittel geschlossen gehalten.

Bei Druckhalten im Bremszylinder 15 wird das Einlaßventil 23 durch die Druckfeder 25 geschlossen. Durch die Drossel 31 kann Druckmittel von der Druckmitteleingangskammer 21 in die Steuerkammer 26 des Einlaßventils 23 einströmen und dort Druck aufbauen.

Druckabbau im Bremszylinder 15 wird durch Ableiten von Druckmittel am Bremsventil 13 zur Atmosphäre eingeleitet. Damit wird auch der Druck in der Steuerkammer 39 des Auslaßventils 35 verringert so daß die damit hervorgerufene Druckdifferenz zwischen der Steuerkammer 39 und der Druckmittelausgangskammer 22 das Öffnen des Auslaßventils 35 bewirkt. Druckmittel kann nun aus dem Bremszylinder 15 über die Druckmittelausgangskammer 22 auf kurzem Wege und beschleunigt zur Druckentlastungsstelle 36 und damit zur Atmosphäre abströmen. Bei niedrigem Restdruck im Bremszylinder 15 wird das Auslaßventil 35 aufgrund der Wirkung der Druckfeder 38 geschlossen. Dieser Restdruck kann sich über die Druckmittelausgangskammer 22, den Kanal 32, das Umschaltventilventil 27, die Drossel 31, die Druckmitteleingangskammer 21 und das Bremsventil 13 zur Atmosphäre abbauen. Ein Restdruck in der Steuerkammer 26 des Einlaßventils 23 kann sich ebenfalls über das Umschaltventil 27, die Drossel 31 und die Druckmitteleingangskammer 21 zum Bremsventil 13 vermindern. Restdruck in der Steuerkammer 39 des Auslaßventils 35 kann sich ebenfalls über die Druckmitteleingangskammer 21 und das Bremsventil 13 abbauen.

Liegt übermäßiger Belagverschleiß an der Radbremse 16 vor, so wird das Umschaltventil 27 betätigt, so daß der Kanal 32 geschlossen, die Verbindungsbohrung 30 dagegen geöffnet ist.

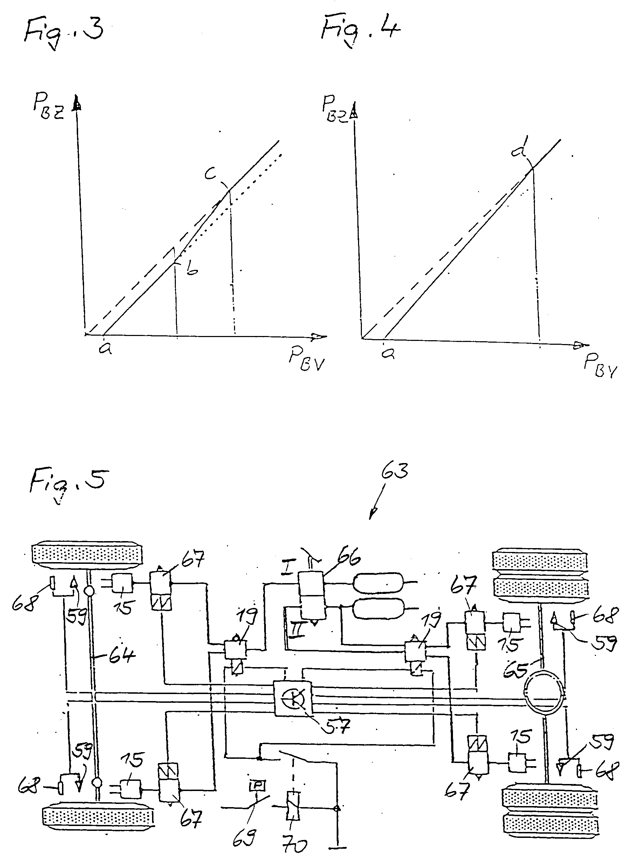

Bei Bremsdruckaufbau gelangt Druckmittel von der Druckmitteleingangskammer 21 durch die Verbindungsbohrung 30 in die Steuerkammer 26 des Einlaßventils 23 und baut dort Druck auf, der das Einlaßventil geschlossen hält. Druckaufbau in der Steuerkammer 39 des Auslaßventils 35 hält dieses ebenfalls geschlossen. Das vom Bremsventil 13 in die Druckmitteleingangskammer 21 eingesteuerte Druckmittel vermag nur über die druckmindernde Ventileinrichtung 43 durch Überwinden der Vorspannkraft der Feder 46 und Öffnen des Rückschlagventils 44 zur Druckmittelausgangskammer 22 und zum Bremszylinder 15 zu gelangen. Dabei erfährt der Bremsdruck eine von der Vorspannkraft der Feder 46 abhängige Minderung gegenüber dem vom Bremsventil 13 ausgesteuerten Druck. Wie weiter unten anhand der Figuren 3 und 4 erläutert, sind entsprechend der Ausbildung der druckmindernden Ventileinrichtung 43 unterschiedliche Druckverläufe erzielbar.

Bei Druckhalten im Bremszylinder 15 verbleiben das Einlaßventil 23 und das Auslaßventil 35 des Drucksteuerventils 19 in ihrer Schließstellung. Das Umschaltventil 27 bleibt weiterhin erregt.

Bei Druckabbau erfolgt wie bei normalen Bremsungen das Öffnen des Auslaßventils 35 und ein beschleunigter Druckabbau im Bremszylinder 15 durch die Druckmittelausgangskammer 22 und die Druckentlastungsstelle 36 zur Atmosphäre. Die druckmindernde Ventileinrichtung 43 nimmt dabei ihre Schließstellung ein. Der in der Steuerkammer 26 des Einlaßventils 23 herrschende Druck kann sich durch die Verbindungsbohrung 30 und die Druckmitteleingangskammer 21 sowie das Bremsventil 13 abbauen. Wenn das Signal des Drucksensors 53 weggefallen ist, schaltet das Umschaltventil 27 in die nicht erregte Stellung. Der Restdruck im Bremszylinder 15 sowie in der Steuerkammer 26 des Einlaßventils 23 und der Steuerkammer 39 des Auslaßventils 35 kann sich wie bei der normalen Bremsung zum Bremsventil 13 hin abbauen.

Wie nachfolgend anhand der Figuren 3 und 4 erläutert, kann der Bremsdruck bei übermäßigem Belagverschleiß entweder um ein konstantes Maß oder um ein mit zunehmender Bremsdruckhöhe sich verminderndes Maß zurückgehalten werden.

Bei normalem Bremsbetrieb erfolgt der ausgesteuerte Druck p_{BZ} im Bremszylinder 15 dem eingesteuerten Druck p_{BV} des Bremsventils 13 im Verhältnis 1:1, was in den beiden Diagrammen anhand der gestrichelten, unter 45° verlaufenden Kennlinie aufgezeigt ist. Diese Kennlinienverläufe sind bei normalen Bremsungen wirksam, also wenn keine belagverschleißabhängige Bremsdrucksteuerung stattfindet.

Bei einer belagverschleißabhängigen Bremsdrucksteuerung lassen sich unterschiedliche Bremsdruckverläufe erzielen:
Besteht die druckmindernde Ventileinrichtung 43 lediglich aus dem Schließglied 45 und der Feder 46 des Rückschlagventils 44, so wird der Bremsdruck p_{BZ} um ein festes Maß zurückgehalten. Dies ist in Figur 3 anhand der parallel zur gestrichelten Kennlinie verlaufenden, zunächst ununterbrochen und anschließend gepunktet gezeichneten Linie dargestellt.

Bei einer druckmindernden Ventileinrichtung 43 mit Steuerleitung 50 gemäß Figur 1 bzw. mit Kolbenglied 47 und Druckfeder 48 gemäß Figur 2 ist es dagegen möglich, Kennlinien zu erzeugen, wie sie in den Figuren 3 und 4 mit durchgehend ausgezogenen Linien wiedergegeben sind.

Wenn nämlich die Vorspannkraft der dem Kolbenglied 47 zugeordneten zweiten Druckfeder 48 größer ist als die Vorspannkraft der Feder 46 des Rückschlagventils 44, so wird bei erregtem Umschaltventil 27 zunächst nur die Anpreßkraft der Feder 46 überwunden und eine gleichbleibende Druckrückhaltung erzielt (Punkt a in Figur 3). Bei demgegenüber gesteigertem Druck p_{BV} vermag das auf das Kolbenglied 47 zusätzlich zur Anpreßkraft der Feder 46 einwirkende Druckmittel die Vorspannkraft der zweiten Druckfeder 48 zu überwinden, so daß das Kolbenglied 47 zurückweicht (Punkt b). Hierdurch wird auch die Anpreßkraft der Feder 46 des Rückschlagventils 44 gemindert und schließlich ganz aufgehoben (Punkt c), so daß der Bremsdruck p_{BZ} ungemindert dem Druck p_{BV} folgt. Die Neigung der Kennlinie zwischen den Punkten b und c ist durch die Federkonstante der zweiten Druckfeder 48 vorgegeben.

Wird die Vorspannkraft der zweiten Druckfeder 48 jedoch gleich der Vorspannkraft der Feder 46 des Rückschlagventils 44 gewählt, so läßt sich ein Kennlinienverlauf erzielen, wie er im Diagrmm gemäß Figur 4 dargestellt ist. Nach Überwinden der Vorspannkraft der Feder 46 öffnet das Rückschlagventil 44 am Punkt a der Kennlinie. An diesem Punkt a wird die maximale Bremsdruckminderung erzielt. Ab Punkt a wird vom eingesteuerten Druck p_{BV} auch die Vorspannkraft der zweiten Druckfeder 48 überwunden und das Kolbenglied 47 vom in der Druckmittelausgangskammer 22 herrschenden Druck zurückgedrängt, so daß eine Minderung der Anpreßkraft der Feder 46 stattfindet. Hierdurch wird eine sich mit steigendem Druck p_{BV} kontinuierlich mindernde Reduzierung der Druckrückhaltung am Rückschlagventil 44 erzielt. Die druckmindernde Wirkung des Rückschlagventils 44 ist am Punkt d der Kennlinie aufgehoben, und diese geht in den 1:1-Verlauf über. Es findet also zwischen den Punkten a und d eine über den Verlauf des eingesteuerten Druckes p_{BV} sich proportional mindernde Reduzierung des ausgesteuerten Bremsdruckes p_{BZ} statt.

Die in Figur 5 dargestellte Druckluft-Bremsanlage 63 weist einen der Vorderachse 64 zugeordneten Bremskreis I und einen der Hinterachse 65 zugeordneten Bremskreis II auf. Beide Bremskreise sind mit einem zweiteiligen Bremsventil 66 ansteuerbar. Sie sind in dieser schematischen Darstellung identisch ausgestattet und weisen an den Radbremsen jeder Achse 64 bzw. 65 zugeordnete und mit einem Steuergerät 57 verbundene Sensoren 59 für die Belagverschleißsensierung auf. Ebenso ist in jedem Bremskreis I bzw. II ein Drucksteuerventil 19 in der in Figur 1 dargestellten Schaltung angeordnet. Stattdessen kann im Hinterachs-Bremskreis II auch ein Relaisventil mit einer bremsdruckmindernden Ventileinrichtung in seinem Steuerteil Verwendung finden. Bei einer Bremsanlage eines Fahrzeugs mit einer übermäßigem Verschleiß ausgesetzten Achse kann es bereits ausreichend sein, die belagverschleißabhängige Bremsdrucksteuerung nur an dieser Achse vorzusehen. Hierdurch ist es möglich, beide Achsen im Verschleißverhalten der Bremsbeläge anzugleichen. Außerdem ist den Bremszylindern 15 jeder Radbremse ein Drucksteuerventil 67 zur Blockierschutzregelung und ggf. Antriebsschlupfregelung zugeordnet.

Diese Drucksteuerventile 67 sind in Abhängigkeit vom Raddrehverhalten, welches mittels Sensoren 68 erfaßt wird, vom Steuergerät 57 schaltbar. Für die achsweise belagverschleißabhängige Bremsdrucksteuerung erzeugt das Steuergerät 57 Signale für das dem jeweiligen Drucksteuerventil 19 zugeordnete Umschaltventil 27, mit dem die bremsdruckmindernde Ventileinrichtung 43 wirksam gemacht werden kann, wenn ein Bremssignal vorliegt. Dieses Signal wird mittels eines Druckschalters 69 mit einem nachgeschalteten Relais 70 erzeugt.

## Patentansprüche

1. Drucksteuerventil (19) für die belagverschleißabhängige Bremsdrucksteuerung in einem Bremszylinder (15) einer Druckluft-Bremsanlage (10) eines Nutzkraftfahrzeugs, mit folgenden Merkmalen:
- eine Druckmitteleingangskammer (21) ist über ein Bremsventil (13) mit einer Druckmittelquelle (11) verbindbar,
- eine Druckmittelausgangskammer (22) ist mit einem Bremszylinder (15) verbunden,
- die Druckmittelausgangskammer (22) ist über ein steuerbares Einlaßventil (23) mit der Druckmitteleingangskammer (21) verbindbar,
- die Druckmittelausgangskammer (22) ist über ein Auslaßventil (35) mit der Atmosphäre verbindbar,
- zur Betätigung des Einlaßventils (23) und des Auslaßventils (35) ist je ein Schließglied (24, 37) vorgesehen,
- das Schließglied (37) des Auslaßventils (35) ist in dessen Schließrichtung federkraftunterstützt von einem Druck in einer Steuerkammer (39) beaufschlagbar,
- die Steuerkammer (39) des Auslaßventils (35) ist an die Druckmitteleingangskammer (21) angeschlossen,
- das Schließglied (24) des Einlaßventils (23) ist in dessen Schließrichtung federkraftunterstützt von einem Druck in einer Steuerkammer (26) beaufschlagbar,
- die Steuerkammer (26) des Einlaßventils (23) ist über ein elektromagnetbetätigbares Umschaltventil (27) mit der Druckmitteleingangskammer (21) verbindbar,
gekennzeichnet durch die weiteren Merkmale:
- eine druckmindernde Ventileinrichtung (43) ist zwischen der Druckmitteleingangskammer (21) und der Druckmittelausgangskammer (22) angeordnet,
- die Steuerkammer (26) des Einlaßventils (23) ist bei nicht erregtem Umschaltventil (27) mit der Druckmittelausgangskammer (22) verbunden,
- das Umschaltventil (27) sperrt bei Vorliegen eines belagverschleißabhängigen Signals und einem einen Bremsvorgang auslösenden oder einem bei einem Bremsvorgang ausgelösten Signal die Verbindung der Steuerkammer (26) des Einlaßventils (23) mit der Druckmittelausgangskammer (22),
- ein der Druckmitteleingangskammer (21) zugeordneter Ventilsitz (29) des Umschaltventils (27) ist von einer Drossel (31) überbrückt.

2. Drucksteuerventil nach Anspruch 1, dadurch gekennzeichnet, daß die druckmindernde Ventileinrichtung (43) als Rückschlagventil (44) mit einem Schließglied (45) ausgebildet ist, das entgegen der Vorspannkraft einer Feder (46) Durchfluß von der Druckmitteleingangskammer (21) zur Druckmittelausgangskammer (22) gestattet.

3. Drucksteuerventil nach Anspruch 2, dadurch gekennzeichnet, daß die Feder (46) als Schraubendruckfeder ausgebildet ist und an einem im Ventilgehäuse (20) druckdicht aufgenommenen Kolbenglied (47) oder Membranglied angreift, das auf seiner einen Seite von der Vorspannkraft dieser Feder sowie dem Druck in der Druckmittelausgangskammer (22) und auf seiner anderen Seite von der Vorspannkraft einer am Ventilgehäuse abgestützten zweiten Druckfeder (48) belastet ist.

4. Drucksteuerventil nach Anspruch 1, dadurch gekennzeichnet, daß das Umschaltventil (27) von einem Bremslichtsignal schaltbar ist.
